# EUROPEAN PATENT APPLICATION

(11) **EP 3 550 341 A1**
(43) Date of publication of application: **09.10.2019**
(21) Application number: 17877283.6
(22) Date of filing: 22.02.2017
(51) Int. Cl.: G02B 5/22, C09K 11/77

(54) **POLYCRYSTALLINE PHOSPHOR FILM, PREPARATION METHOD THEREFOR, AND VEHICLE LAMP DEVICE USING SAME**

(30) Priority: 02.12.2016 KR 20160163396
(71) Applicant: LG Electronics Inc., Seoul 07336 (KR)
(72) Inventor: KANG, Dongwon, Seoul 06772 (KR); KIM, Soongil, Seoul 06772 (KR); KIM, Hongjung, Seoul 06772 (KR); HONG, Gunyoung, Seoul 06772 (KR)
(74) Representative: Vossius & Partner Patentanwälte Rechtsanwälte mbB
(86) International application number: PCT/KR2017/001936
(87) International publication number: WO 2018/101542

(57) **Abstract**

Provided are a polycrystalline phosphor film applicable to a high-power optical device, a preparation method therefor, and a vehicle lamp device using the same, wherein the polycrystalline phosphor film comprises a plurality of phosphor crystals and pores formed between the phosphor crystals, and the phosphor crystal can be a synthesized product comprising at least one rare earth material and cerium (Ce). In addition, the method for preparing a polycrystalline phosphor film can comprise the steps of: preparing a phosphor powder comprising a plurality of phosphor particles; injecting the phosphor powder into a predetermined mold so as to mold the same into a predetermined shape; generating a sintered body by primarily sintering, at a first temperature, the phosphor powder having the predetermined shape; secondarily sintering the sintered body, having been primarily sintered, at a second temperature lower than the first temperature; and forming a polycrystalline phosphor film by processing the sintered body having been secondarily sintered.

## Description

### Technical Field

The present invention relates to a polycrystalline phosphor film applicable to a high-power optical device, a manufacturing method therefor, and a vehicle lamp device using the same.

### Background Art

Generally, a phosphor is used to convert blue light to white light.

For example, if a phosphor film is manufactured by mixing a phosphor with silicon resin, the phosphor film may convert incident blue light to white light.

Recently, in accordance with increase of demands for high-power light sources such as a head lamp of a vehicle and a high-power lamp device, a high-power blue light emitting diode and a blue laser diode are increasingly used.

However, if a phosphor film which is a mixture of silicon resin and a phosphor is applied to the high-power blue light source, problems occur in that silicon resin is degraded and discolored and optical conversion efficiency is deteriorated due to deterioration of thermal characteristic of the phosphor film.

To solve the problems, a ceramic type phosphor film has been recently attempted to be applied to a high-power blue light source. However, there is limitation in improving optical conversion characteristic because the phosphor is damaged by thermal impact of the high-power light source and it is difficult to control a ceramic fine structure.

Therefore, development of a phosphor film capable of obtaining stably high optical conversion efficiency even if the phosphor film is applied to a high-power light source will be required.

### Disclosure

### Technical Problem

An object of the present invention is to solve the aforementioned problems and other problems. Another object of the present invention is to provide a polycrystalline phosphor film, a manufacturing method therefor, and a vehicle lamp device using the same, in which the phosphor film is manufactured by performing a sintering process two times to enhance optical conversion efficiency.

Still another object of the present invention is to provide a polycrystalline phosphor film, a manufacturing method therefor, and a vehicle lamp device using the same, in which a transmissive type polycrystalline phosphor film is manufactured to have phosphor crystalline of which relative density is 98% to 99.99%, approximately and pores of which rate is 0.5% to 2%, approximately, thereby improving light emission characteristic.

Further still another object of the present invention is to provide a polycrystalline phosphor film, a manufacturing method therefor, and a vehicle lamp device using the same, in which a reflective type polycrystalline phosphor film is manufactured to have phosphor crystalline of which relative density is 90% to 96%, approximately and pores of which rate is 3% to 10%, approximately, thereby improving light emission characteristic.

Further still another object of the present invention is to provide a polycrystalline phosphor film, a manufacturing method therefor, and a vehicle lamp device using the same, in which a reflective type polycrystalline phosphor film containing a first phosphor crystalline includes a light emitting phosphor material and a second phosphor crystalline includes a non-light emitting phosphor material is manufactured to control surface reflective characteristic.

Further still another object of the present invention is to provide a polycrystalline phosphor film, a manufacturing method therefor, and a vehicle lamp device using the same, in which a polycrystalline phosphor film capable of emitting white light having a color temperature of 5500K to 6500K when light of a blue wavelength range enters there is manufactured to be applied to a head lamp light source of which yellow ring phenomenon is reduced.

It will be appreciated by persons skilled in the art that the objects that could be achieved with the present invention are not limited to what have been particularly described hereinabove and the above and other objects that the present invention could achieve will be more clearly understood from the following detailed description.

### Technical Solution

A polycrystalline phosphor film according to one embodiment of the present invention includes a plurality of phosphor crystallines, and pores formed between the phosphor crystallines, and the phosphor crystalline may be compounds containing at least one rare-earth material and cerium (Ce).

A method for manufacturing a polycrystalline phosphor film according to one embodiment of the present invention may include the steps of preparing phosphor powders containing a plurality of phosphor particles, molding the phosphor powders in a predetermined shape by injecting the phosphor powders into a predetermined mold, generating a sintered body by primarily sintering the phosphor powders having the predetermined shape at a first temperature, secondarily sintering the primarily sintered body at a second temperature lower than the first temperature, and forming a polycrystalline phosphor film by processing the secondarily sintered body.

A vehicle lamp device using a polycrystalline phosphor film according to one embodiment of the present invention comprises a light source for generating light, the polycrystalline phosphor film arranged on the light source, a reflector for reflecting light generated from the light source to change a direction of the light, and a lens for refracting the light reflected from the reflector, the polycrystalline phosphor film including a plurality of phosphor crystallines, and pores formed between the phosphor crystallines, and the phosphor crystalline may be compounds containing at least one rare-earth material and cerium (Ce).

### Advantageous Effects of the Invention

Advantageous effects of a polycrystalline phosphor film, a manufacturing method therefor, and a vehicle lamp device using the same according to the present invention are as follows.

According to at least one of the embodiments of the present invention, the polycrystalline phosphor film may be manufactured by performing a sintering process two times, whereby optical conversion efficiency may be enhanced.

According to at least one of the embodiments of the present invention, a transmissive type polycrystalline phosphor film may be manufactured to have phosphor crystalline of which relative density is 98% to 99.99%, approximately and pores of which rate is 0.5% to 2%, approximately, whereby light emission characteristic may be improved.

According to at least one of the embodiments of the present invention, a reflective type polycrystalline phosphor film may be manufactured to have phosphor crystalline of which relative density is 90% to 96%, approximately and pores of which rate is 3% to 10%, approximately, whereby light emission characteristic may be improved.

According to at least one of the embodiments of the present invention, a reflective type polycrystalline phosphor film including a first phosphor crystalline including a light emitting phosphor material and a second phosphor crystalline including a non-light emitting phosphor material may be manufactured, whereby surface reflective characteristic may be controlled.

According to at least one of the embodiments of the present invention, a polycrystalline phosphor film capable of emitting white light having a color temperature of 5500K to 6500K when light of a blue wavelength range enters there may be manufactured to be applied to a head lamp light source of which yellow ring phenomenon is reduced.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### Brief Description of the Drawings

FIG. 1 is a structural sectional view illustrating a polycrystalline phosphor film according to one embodiment of the present invention.
FIG. 2 is a view illustrating a transmissive type polycrystalline phosphor film according to the present invention.
FIG. 3 is a view illustrating a reflective type polycrystalline phosphor film according to the present invention.
FIG. 4 is a graph illustrating a light emission spectrum of a polycrystalline phosphor film according to the present invention.
FIG. 5 is a block diagram illustrating a manufacturing process of a polycrystalline phosphor film according to the present invention.
FIGS. 6 and 7 are views illustrating a sintering process of a polycrystalline phosphor film according to the present invention.
FIG. 8 is a view illustrating transparency of a transmissive type polycrystalline phosphor film according to the present invention.
FIG. 9 is a graph illustrating a light spectrum of a transmissive type polycrystalline phosphor film according to the present invention.
FIG. 10 is a graph illustrating transparency of a reflective type polycrystalline phosphor film according to the present invention.
FIG. 11 is a graph illustrating a light spectrum of a reflective type polycrystalline phosphor film according to the present invention.
FIG. 12 is a structural sectional view illustrating a polycrystalline phosphor film according to another embodiment of the present invention.
FIGS. 13 to 17 are views illustrating a process of injecting phosphor powders into a mold.
FIGS. 18 to 21 are flow charts illustrating a manufacturing method of a polycrystalline phosphor film according to the present invention.
FIG. 22 is a sectional view illustrating a head lamp of a vehicle using a polycrystalline phosphor film according to the present invention.
FIG. 23 is a front view illustrating a head lamp of a vehicle using a polycrystalline phosphor film according to the present invention.

### Best Mode for Carrying Out the Invention

Reference will now be made in detail to the preferred embodiments of the present specification, examples of which are illustrated in the accompanying drawings. Wherever possible, the same reference numbers will be used throughout the drawings to refer to the same or like parts. The suffixes "module" and "unit" for the elements used in the following description are given or used in common by considering facilitation in writing this disclosure only but fail to have meanings or roles discriminated from each other. Also, in description of the embodiments disclosed in this specification, if detailed description of the disclosure known in respect of the present invention is determined to make the subject matter of the embodiments disclosed in this specification obscure, the detailed description will be omitted. Also, the accompanying drawings are only intended to facilitate understanding of the embodiments disclosed in this specification, and it is to be understood that technical spirits disclosed in this specification are not limited by the accompanying drawings and the accompanying drawings include all modifications, equivalents or replacements included in technical spirits and technical scope of the present invention.

Although the terms such as "first" and/or "second" in this specification may be used to describe various elements, it is to be understood that the elements are not limited by such terms. The terms may be used to identify one element from another element.

The expression that an element is "connected" or "coupled" to another element should be understood that the element may directly be connected or coupled to another element, a third element may be interposed between the corresponding elements, or the corresponding elements may be connected or coupled to each other through a third element. On the other hand, the expression that an element is "directly connected" or "directly coupled" to another element" means that no third element exists therebetween.

It is to be understood that the singular expression used in this specification includes the plural expression unless defined differently on the context.

In this application, it is to be understood that the terms such as "include" and "has" are intended to designate that features, numbers, steps, operations, elements, parts, or their combination, which are disclosed in the specification, exist, and are intended not to previously exclude the presence or optional possibility of one or more other features, numbers, steps, operations, elements, parts, or their combinations.

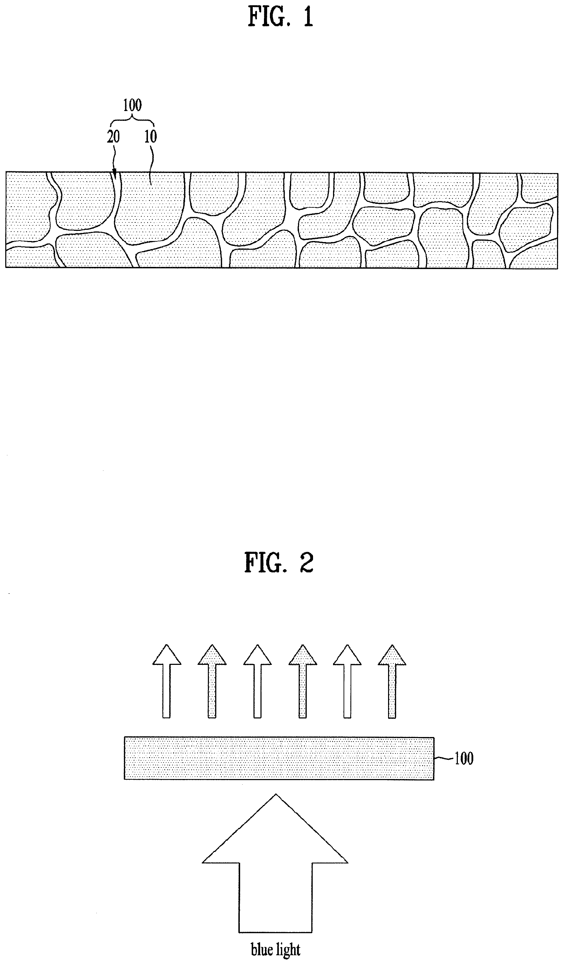

FIG. 1 is a structural sectional view illustrating a polycrystalline phosphor film according to one embodiment of the present invention.

As shown in FIG. 1, a polycrystalline phosphor film 100 of the present invention may include a plurality of phosphor crystallines 10 and pores 20 formed between the respective phosphor crystallines 10.

In this case, the phosphor crystallines 10 may be compounds containing at least rare-earth material and Ce.

At this time, at least one rare-earth material may include, but is not limited to, Y, Gd, La, and Lu.

For example, the phosphor crystallines 10 may be (A-Ceₓ)₃Al₅O₁₂, wherein A may be at least one of Y, Gd, La and Lu, and X may be 0.001 to 0.1.

The polycrystalline phosphor film of the present invention may be applied to a transmissive light source or a reflective light source.

The polycrystalline phosphor film 100 applicable to the transmissive light source and the polycrystalline phosphor film 100 applicable to the reflective light source may be different from each other in view of manufacturing process conditions and fine structure characteristic.

In this case, the polycrystalline phosphor film 100 applicable to the transmissive light source may generate light of a yellow wavelength range to emit light having a color temperature of 5500K to 6500K, approximately, when light of a blue wavelength range is transmitted.

The polycrystalline phosphor film 100 applicable to the reflective light source may generate light of a yellow wavelength range to emit light having a color temperature of 5500K to 6500K, approximately, when light of a blue wavelength range is reflected.

For example, in case of the polycrystalline phosphor film 100 applicable to the transmissive light source, the plurality of phosphor crystallines 10 may have a relative density of 98% to 99.99%, approximately.

This is because that the polycrystalline phosphor film 100 cannot emit white light having a color temperature of 5500K to 6500K as transmittance of blue light is deteriorated if the relative density is 98% or less.

The pores 20 may have a rate of 0.5% to 2%, approximately, when the relative density of the plurality of phosphor crystallines 10 is 98% to 99.99%, approximately.

This is because that the polycrystalline phosphor film 100 cannot emit white light having a color temperature of 5500K to 6500K as transmittance of blue light is increased if the rate of the pores is 0.5% or less, and that the polycrystalline phosphor film 100 cannot emit white light having a color temperature of 5500K to 6500K as transmittance of blue light is deteriorated if the rate of the pores is 2% or more.

Also, the phosphor crystalline 10 has a size of 0.7µm to 2µm, approximately when the relative density of the phosphor crystalline 10 is 98% to 99.99%, approximately.

This is because that the polycrystalline phosphor film 100 cannot emit white light having a color temperature of 5500K to 6500K as transmittance of blue light is deteriorated in the case that the size of the phosphor crystalline 10 is 0.7µm or less, and that the polycrystalline phosphor film 100 cannot emit white light having a color temperature of 5500K to 6500K as transmittance of blue light is increased in the case that the size of the phosphor crystalline 10 is 2µm or more.

Also, a primary sintering process of a first temperature and a secondary sintering process of a second temperature lower than the first temperature may be performed for the transmissive type polycrystalline phosphor film 100.

In this case, the primary sintering process is a process for densification of the transmissive type polycrystalline phosphor film 100, and the secondary sintering process is a process for removing defects in the transmissive type polycrystalline phosphor film 100.

For example, the first temperature of the primary sintering process may be 1500°C to 1700°C, approximately, when the relative density of the plurality of phosphor crystallines 10 is 98% to 99.99%, approximately.

This is because that a sintered body which is not suitable for the transmissive type polycrystalline phosphor film is formed when the first temperature of the primary sintering process is 1500°C or less and that the sintered body is too densified to generate the phosphor crystalline 10 when the first temperature of the primary sintering process is 1700°C or more.

Also, the second temperature of the secondary sintering process may be a temperature lower than the first temperature of the primary sintering process as much as 300°C to 400°C when the relative density of the plurality of phosphor crystallines 10 is 98% to 99.99%, approximately.

This is because that light emission characteristic is deteriorated due to remaining defects as it is difficult to remove defects if the second temperature of the secondary sintering process is too low and that the phosphor crystalline 10 may partially be damaged if the second temperature of the secondary sintering process is too high.

Meanwhile, in case of the polycrystalline phosphor film 100 applicable to the reflective type light source, the plurality of phosphor crystallines 10 may have a relative density of 90% to 96%, approximately.

This is because that the polycrystalline phosphor film 100 cannot emit white light having a color temperature of 5500K to 6500K as reflectivity of light is too high when light of a blue wavelength range is reflected if the relative density is 90% or less and that the polycrystalline phosphor film 100 cannot emit white light having a color temperature of 5500K to 6500K as reflectivity of light is too low when light of a blue wavelength range is reflected if the relative density is 96% or more.

The pores 20 may have a rate of 3% to 10%, approximately, when the relative density of the plurality of phosphor crystallines 10 is 90% to 96%, approximately.

This is because that the polycrystalline phosphor film 100 cannot emit white light having a color temperature of 5500K to 6500K as reflectivity of blue light is deteriorated if the rate of the pores is 3% or less, and that the polycrystalline phosphor film 100 cannot emit white light having a color temperature of 5500K to 6500K as reflectivity of blue light is increased if the rate of the pores is 10% or more.

Also, the phosphor crystalline 10 has a size of 0.1µm to 0.7µm, approximately when the relative density of the phosphor crystalline 10 is 90% to 96%, approximately.

This is because that the polycrystalline phosphor film 100 cannot emit white light having a color temperature of 5500K to 6500K as reflectivity of blue light is increased in the case that the size of the phosphor crystalline 10 is 0.1µm or less, and that the polycrystalline phosphor film 100 cannot emit white light having a color temperature of 5500K to 6500K as reflectivity of blue light is deteriorated in the case that the size of the phosphor crystalline 10 is 0.7µm or more.

Also, a primary sintering process of a first temperature and a secondary sintering process of a second temperature lower than the first temperature may be performed for the reflective type polycrystalline phosphor film 100.

In this case, the primary sintering process is a process for densification of the reflective type polycrystalline phosphor film 100, and the secondary sintering process is a process for removing defects in the reflective type polycrystalline phosphor film 100.

For example, the first temperature of the primary sintering process may be 1000°C to 1500°C, approximately, when the relative density of the plurality of phosphor crystallines 10 is 90% to 96%, approximately.

This is because that sintering of the phosphor film is not performed in the case that the first temperature of the primary sintering process is 1000°C or less and that a sintered body is too densified and thus a sintered body which is not suitable for the reflective type phosphor film is formed if the first temperature of the primary sintering process is 1500°C or more.

Also, the second temperature of the secondary sintering process may be a temperature lower than the first temperature of the primary sintering process as much as 300°C to 400°C when the relative density of the plurality of phosphor crystallines 10 is 90% to 96%, approximately.

This is because that light emission characteristic is deteriorated due to remaining defects as it is difficult to remove defects if the second temperature of the secondary sintering process is too low and that the phosphor crystalline 10 may partially be damaged when the second temperature of the secondary sintering process is too high.

As the case may be, in case of the reflective type polycrystalline phosphor film 100, the plurality of phosphor crystallines 10 may include a first phosphor crystalline including a light emitting phosphor material and a second phosphor crystalline including a non-light emitting phosphor material.

This is to improve surface reflective characteristic.

As the case may be, in the present invention, a mixture ratio of the first phosphor crystalline including a light emitting phosphor material and the second phosphor crystalline including a non-light emitting phosphor material may be controlled to control surface reflective characteristic and remove a yellow ring phenomenon.

The yellow ring phenomenon means that a yellow color is seen near a center portion of white light emitted from a white light emitting diode light source and a laser.

In this case, a difference in thermal expansion coefficients between the first phosphor crystalline and the second phosphor crystalline may be 0 to 2.0x10⁻⁶/K.

This is because that optical characteristic may be deteriorated as a crystalline suitable for the reflective type phosphor film cannot be obtained if the difference in thermal expansion coefficients is great.

For example, the thermal expansion coefficient of the first phosphor crystalline may be 8.0x10⁻⁶/K to 9.0x10⁻⁶/K, approximately and the thermal expansion coefficient of the second phosphor crystalline may be 6.0x10⁻⁶/K to 9.0x10⁻⁶/K, approximately.

The first phosphor crystalline may include, but is not limited to, (ACeₓ)₃Al₅O₁₂ (where A is at least one of Y, Gd, La and Lu, and X is 0.001 to 0.1).

Subsequently, the second phosphor crystalline may include, but is not limited to, at least one of (A)₃Al₅O₁₂ (where A is at least one of Y, Gd, La and Lu), Al₂O₃ and ZrO₂.

Also, the second phosphor crystalline may be 0.1wt% to 50wt%, approximately with respect to the first phosphor crystalline.

This is because that surface reflective characteristic of the phosphor film may be deteriorated when the second phosphor crystalline is 0.1wt% or less or 50wt% or more with respect to the first phosphor crystalline.

The plurality of phosphor crystallines 10 including the first and second phosphor crystallines may have a relative density of 90% to 96%, approximately.

In this way, the polycrystalline phosphor film 100 including the plurality of phosphor crystallines 10 may emit white light having a color temperature of 5500K to 6500K by generating light of a yellow wavelength range when light of a blue wavelength range enters there.

Therefore, in the present invention, the polycrystalline phosphor film may be manufactured by performing the sintering process two times, whereby optical conversion efficiency may be enhanced.

Also, in the present invention, the transmissive type polycrystalline phosphor film may be manufactured to have phosphor crystalline of which relative density is 98% to 99.99%, approximately and pores of which rate is 0.5% to 2%, approximately, whereby light emission characteristic may be improved.

Also, in the present invention, the reflective type polycrystalline phosphor film may be manufactured to have phosphor crystalline of which relative density is 90% to 96%, approximately and pores of which rate is 3% to 10%, approximately, whereby light emission characteristic may be improved.

Also, in the present invention, the reflective type polycrystalline phosphor film including a first phosphor crystalline including a light emitting phosphor material and a second phosphor crystalline including a non-light emitting phosphor material may be manufactured, whereby surface reflective characteristic may be controlled.

Also, in the present invention, the polycrystalline phosphor film capable of emitting white light having a color temperature of 5500K to 6500K when light of a blue wavelength range enters there may be manufactured to be applied to a head lamp light source of which yellow ring phenomenon is reduced.

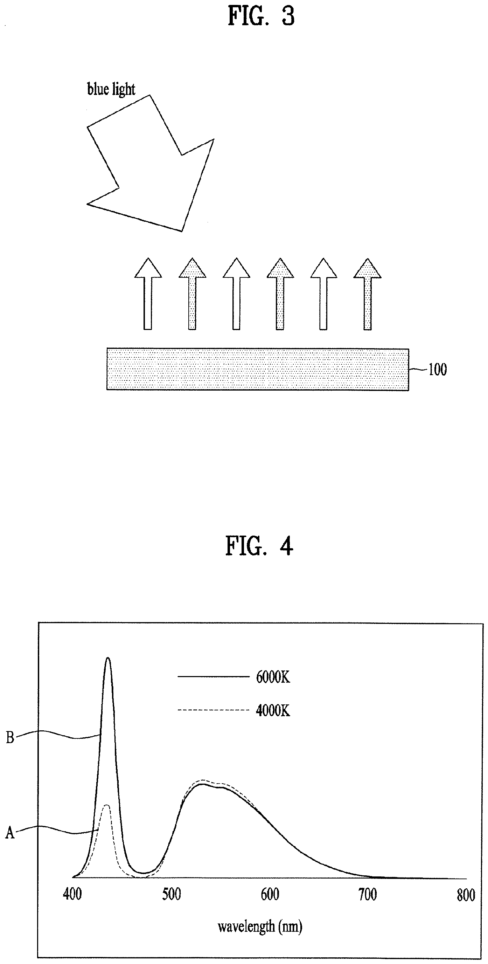

FIG. 2 is a view illustrating a transmissive type polycrystalline phosphor film according to the present invention, FIG. 3 is a view illustrating a reflective type polycrystalline phosphor film according to the present invention, and FIG. 4 is a graph illustrating a light emission spectrum of a polycrystalline phosphor film according to the present invention.

As shown in FIG. 2, if blue light enters the transmissive type polycrystalline phosphor film 100, the transmissive type polycrystalline phosphor film 100 may emit white light having a color temperature of 5500K to 6500K by emitting blue light transmitting the phosphor film and yellow light scattered by a phosphor.

In this case, the plurality of phosphor crystallines included in the transmissive type polycrystalline phosphor film 100 may have a relative density of 98% to 99.99%.

This is because that the transmissive type polycrystalline phosphor film 100 cannot emit white having a color temperature of 5500K to 6500K as transmittance of blue light is deteriorated if the relative density is 98% or less.

The pores 20 included in the transmissive type polycrystalline phosphor film 100 may have a rate of 0.5% to 2%, approximately.

This is because that the transmissive type polycrystalline phosphor film 100 cannot emit white light having a color temperature of 5500K to 6500K as transmittance of blue light is increased if the rate of the pores is 0.5% or less, and that the polycrystalline phosphor film 100 cannot emit white light having a color temperature of 5500K to 6500K as transmittance of blue light is deteriorated if the rate of the pores is 2% or more.

Also, the phosphor crystalline 10 included in the transmissive type polycrystalline phosphor film 100 may have a size of 0.7µm to 2µm, approximately.

This is because that the transmissive type polycrystalline phosphor film 100 cannot emit white light having a color temperature of 5500K to 6500K as transmittance of blue light is deteriorated when the size of the phosphor crystalline 10 is 0.7µm or less, and that the transmissive type polycrystalline phosphor film 100 cannot emit white light having a color temperature of 5500K to 6500K as transmittance of blue light is increased when the size of the phosphor crystallines 10 is 2µm or more.

Also, a primary sintering process of a first temperature and a secondary sintering process of a second temperature lower than the first temperature may be performed for the transmissive type polycrystalline phosphor film 100.

In this case, the first temperature of the primary sintering process may be 1500°C to 1700°C, approximately.

This is because that a sintered body which is not suitable for the transmissive type polycrystalline phosphor film is formed if the first temperature of the primary sintering process is 1500°C or less and that the sintered body is too densified to generate the phosphor crystalline when the first temperature of the primary sintering process is 1700°C or more.

Also, the second temperature of the secondary sintering process may be a temperature lower than the first temperature of the primary sintering process as much as 300°C to 400°C.

This is because that light emission characteristic is deteriorated due to remaining defects as it is difficult to remove defects when the second temperature of the secondary sintering process is too low and that the phosphor crystalline may partially be damaged when the second temperature of the secondary sintering process is too high.

Next, as shown in FIG. 3, in the case that blue light enters the reflective type polycrystalline phosphor film 100, the reflective type polycrystalline phosphor film 100 may emit white light having a color temperature of 5500K to 6500K by emitting blue light reflecting the phosphor film and yellow light scattered by a phosphor.

In this case, the plurality of phosphor crystallines 10 included in the reflective type polycrystalline phosphor film 100 may have a relative density of 90% to 96%.

This is because that the reflective type polycrystalline phosphor film 100 cannot emit white having a color temperature of 5500K to 6500K as reflectivity of blue light is too high when light of a blue wavelength range is reflected if the relative density is 90% or less and that the reflective type polycrystalline phosphor film 100 cannot emit white having a color temperature of 5500K to 6500K as reflectivity of blue light is too low when light of a blue wavelength range is reflected if the relative density is 96% or more.

The pores included in the reflective type polycrystalline phosphor film 100 may have a rate of 3% to 10%, approximately.

This is because that the reflective type polycrystalline phosphor film 100 cannot emit white light having a color temperature of 5500K to 6500K as reflectivity of blue light is deteriorated when the rate of the pores is 3% or less, and that the reflective type polycrystalline phosphor film 100 cannot emit white light having a color temperature of 5500K to 6500K as reflectivity of blue light is increased when the rate of the pores is 10% or more.

Also, the phosphor crystalline included in the reflective type polycrystalline phosphor film 100 may have a size of 0.1µm to 0.7µm, approximately.

This is because that the reflective type polycrystalline phosphor film 100 cannot emit white light having a color temperature of 5500K to 6500K as reflectivity of blue light is increased in the case that the size of the phosphor crystalline 10 is 0.1 µm or less, and that the reflective type polycrystalline phosphor film 100 cannot emit white light having a color temperature of 5500K to 6500K as reflectivity of blue light is deteriorated when the size of the phosphor crystalline 10 is 0.7µm or more.

Also, a primary sintering process of a first temperature and a secondary sintering process of a second temperature lower than the first temperature may be performed for the reflective type polycrystalline phosphor film 100.

In this case, the first temperature of the primary sintering process may be 1000°C to 1500°C, approximately.

This is because that sintering of the phosphor film is not performed when the first temperature of the primary sintering process is 1000°C or less and that a sintered body is too densified and thus a sintered body which is not suitable for the reflective type phosphor film is formed when the first temperature of the primary sintering process is 1500°C or more.

Also, the second temperature of the secondary sintering process may be a temperature lower than the first temperature of the primary sintering process as much as 300°C to 400°C.

This is because that light emission characteristic is deteriorated due to remaining defects as it is difficult to remove defects if the second temperature of the secondary sintering process is too low and that the phosphor crystalline 10 may partially be damaged when the second temperature of the secondary sintering process is too high.

Subsequently, as shown in FIG. 4, although the existing phosphor film emits light having a color temperature of 4000K, approximately like a light spectrum A, the polycrystalline phosphor film of the present invention emits light having a color temperature of 6000K, approximately like a light spectrum B, whereby the polycrystalline phosphor film of the present invention may appropriately be applied to a high-power light source such as a head lamp light source of a vehicle.

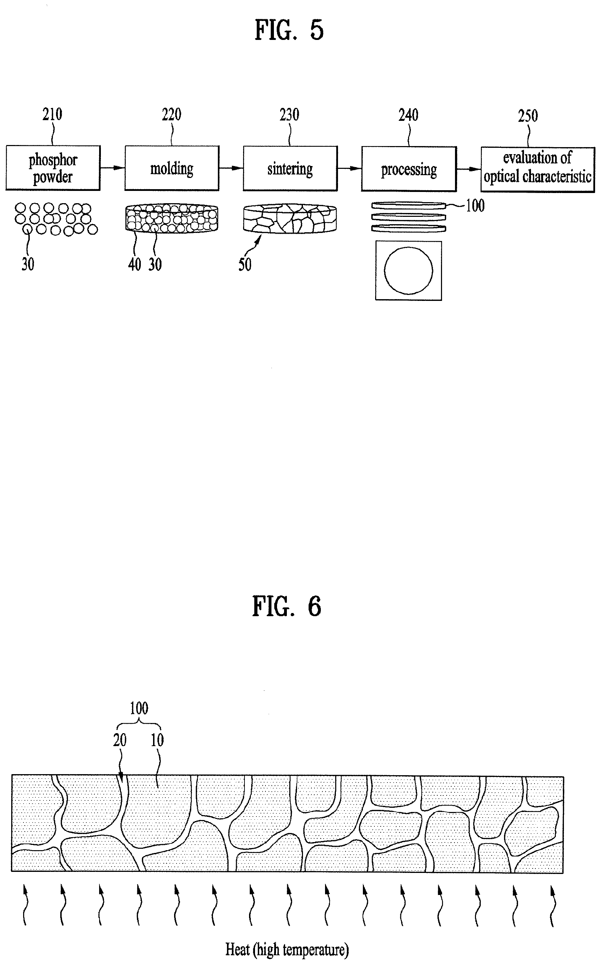

FIG. 5 is a block diagram illustrating a manufacturing process of a polycrystalline phosphor film according to the present invention.

As shown in FIG. 5, a first step S210 is to prepare phosphor powders containing a plurality of phosphor particles 30.

In this case, the phosphor particles 30 contained in the phosphor powders may be compounds containing at least rare-earth material and Ce.

For example, at least one rare-earth material may include, but is not limited to, Y, Gd, La, and Lu.

As the case may be, the phosphor particles 30 contained in the phosphor particles may be (A-Ceₓ)₃Al₅O₁₂, and A may be at least one of Y, Gd, La and Lu, and X may be 0.001 to 0.1.

As another case, the phosphor particles 30 contained in the phosphor powders may include a first phosphor particle including a light emitting phosphor material and a second phosphor particle including a non-light emitting phosphor material.

In this case, a difference in thermal expansion coefficients between the first phosphor particle and the second phosphor particle may be 0 to 2.0x10⁻⁶/K.

For example, the thermal expansion coefficient of the first phosphor particle may be 8.0x10⁻⁶/K to 9.0x10⁻⁶/K, approximately and the thermal expansion coefficient of the second phosphor particle may be 6.0x10⁻⁶/K to 9.0x10⁻⁶/K, approximately.

The first phosphor particle may include, but is not limited to, (A-Ceₓ)₃Al₅O₁₂ (where A is at least one of Y, Gd, La and Lu, and X is 0.001 to 0.1), and the second phosphor particle may include, but is not limited to, at least one of (A)₃Al₅O₁₂ (where A is at least one of Y, Gd, La and Lu), Al₂O₃ and ZrO₂.

Also, the second phosphor particle may be 0.1wt% to 50wt%, approximately with respect to the first phosphor particle.

Next, a second step 220 is to mold the phosphor powders in a predetermined shape by injecting the phosphor powders into a predetermined mold 40.

In this case, the phosphor particles 30 of the phosphor powders injected into the predetermined mold 40 may have a size of 100nm to 1000nm, approximately.

This is because that crystallization of the phosphor particles 30 is not performed during a sintering process if the size of the phosphor particles 30 is 100nm or less or 1000nm or more.

Also, the phosphor particles 30 of the phosphor powders injected into the predetermined mold 40 may have a uniform size.

However, as the case may be, the phosphor particles 30 of the phosphor powders injected into the predetermined mold 40 may have a non-uniform size.

For example, in the sizes of the phosphor particles 30 of the phosphor powders injected into the predetermined mold 40, the sizes of the phosphor particles 30 of the phosphor powders injected into an upper area and a lower area of the predetermined mold 40 may be smaller than those of the phosphor particles 30 of the phosphor powders injected into a center area between the upper area and the lower area of the predetermined mold 40.

As the case may be, the sizes of the phosphor particles 30 of the phosphor powders injected into the predetermined mold 40 may become greater toward the center area from the upper area or the lower area of the predetermined mold 40.

As another case, in the sizes of the phosphor particles 30 of the phosphor powders injected into the predetermined mold 40, the sizes of the phosphor particles 30 of the phosphor powders injected into the upper area and the lower area of the predetermined mold 40 may be greater than those of the phosphor particles 30 of the phosphor powders injected into the center area between the upper area and the lower area of the predetermined mold 40.

As other case, the sizes of the phosphor particles 30 of the phosphor powders injected into the predetermined mold 40 may become smaller toward the center area from the upper area or the lower area of the predetermined mold 40.

Next, a third step 230 is to primarily sinter the phosphor powders having a predetermined shape at a first temperature to generate a sintered body 50 and secondarily sinter the primarily sintered body 50 at a second temperature lower than the first temperature.

In this case, the first temperature of the primary sintering may be 1500°C to 1700°C, approximately, or may be 1000°C to 1500°C, approximately.

The second temperature of the secondary sintering may be a temperature lower than the first temperature of the primary sintering as much as 300°C to 400°C.

Subsequently, a fourth step 240 is to form a polycrystalline phosphor film by processing the secondarily sintered body 50.

In this case, the polycrystalline phosphor film 100 may include a plurality of phosphor crystallines and pores formed between the phosphor crystallines. The plurality of phosphor crystallines may have a relative density of 98% to 99.99%, the pores may have a rate of 0.5% to 2%, and the phosphor crystalline may have a size of 0.7µm to 2um.

Also, the polycrystalline phosphor film 100 may include a plurality of phosphor crystallines and pores formed between the phosphor crystallines. The plurality of phosphor crystallines may have a relative density of 90% to 96%, the pores may have a rate of 3% to 10%, and the phosphor crystalline may have a size of 0.1µm to 0.7µm.

Next, a fifth step 250 is to evaluate optical characteristic of the polycrystalline phosphor film 100.

In this case, the polycrystalline phosphor film 100 may emit light having a color temperature of 5500K to 6500K by generating light of a yellow wavelength range when light of a blue wavelength range enters there.

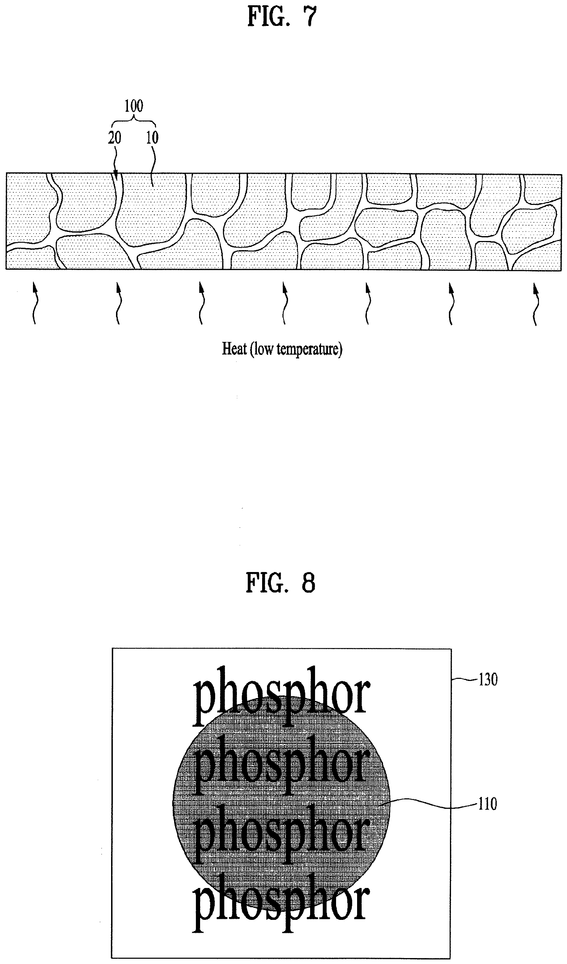

FIGS. 6 and 7 are views illustrating a sintering process of a polycrystalline phosphor film according to the present invention.

The polycrystalline phosphor film 100 according to the present invention may include a plurality of phosphor crystallines 10 and pores 20 formed between the phosphor crystallines 10.

In this case, after the primary sintering process of the first temperature is performed for the polycrystalline phosphor film 100 as shown in FIG. 6 and then the secondary sintering process of the second temperature lower than the first temperature may be performed for the polycrystalline phosphor film 100 as shown in FIG. 7.

In this case, the primary sintering process is a process for densification of the polycrystalline phosphor film 100, and the secondary sintering process is a process for removing defects in the polycrystalline phosphor film 100.

In case of the transmissive type polycrystalline phosphor film, the first temperature of the primary sintering process may be 1500°C to 1700°C, approximately.

This is because that a sintered body which is not suitable for the transmissive type polycrystalline phosphor film is formed if the first temperature of the primary sintering process is 1500°C or less and that the sintered body is too densified to generate the phosphor crystallines when the first temperature of the primary sintering process is 1700°C or more.

Also, in case of the transmissive polycrystalline phosphor film, the second temperature of the secondary sintering process may be a temperature lower than the first temperature of the primary sintering process as much as 300°C to 400°C.

This is because that light emission characteristic is deteriorated due to remaining defects as it is difficult to remove defects when the second temperature of the secondary sintering process is too low and that the phosphor crystalline may partially be damaged if the second temperature of the secondary sintering process is too high.

Also, in case of the reflective type polycrystalline phosphor film, the first temperature of the primary sintering process may be 1000°C to 1500°C, approximately.

This is because that sintering of the phosphor film is not performed if the first temperature of the primary sintering process is 1000°C or less and that a sintered body is too densified and thus a sintered body which is not suitable for the reflective type phosphor film is formed if the first temperature of the primary sintering process is 1500°C or more.

Also, in case of the reflective type polycrystalline phosphor film, the second temperature of the secondary sintering process may be a temperature lower than the first temperature of the primary sintering process as much as 300°C to 400°C.

This is because that light emission characteristic is deteriorated due to remaining defects as it is difficult to remove defects when the second temperature of the secondary sintering process is too low and that the phosphor crystalline 10 may partially be damaged when the second temperature of the secondary sintering process is too high.

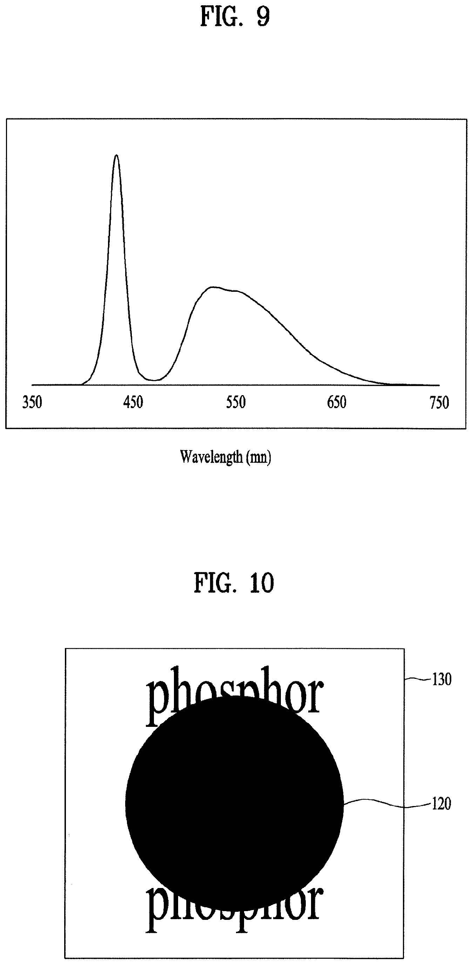

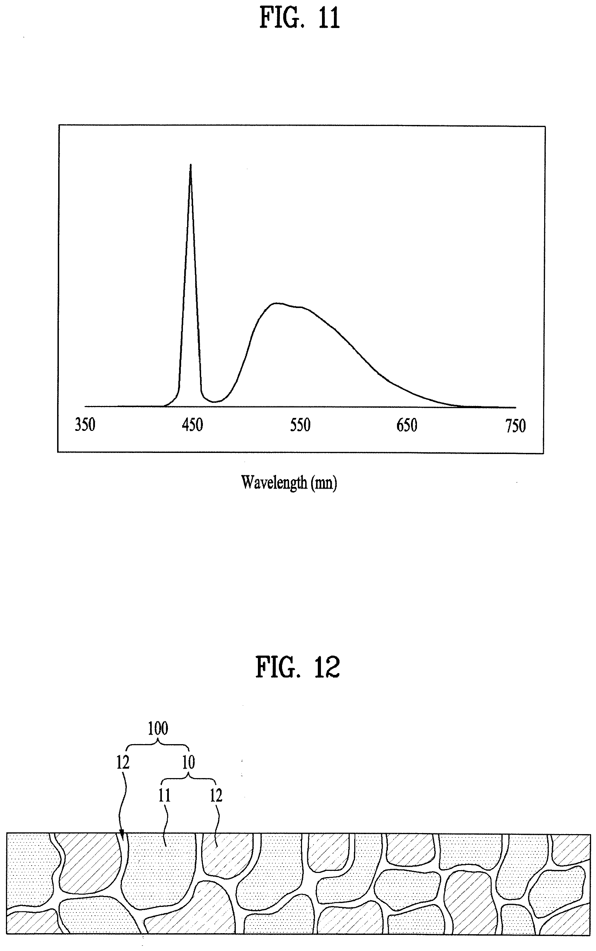

FIG. 8 is a view illustrating transparency of a transmissive type polycrystalline phosphor film according to the present invention, FIG. 9 is a graph illustrating a light spectrum of a transmissive type polycrystalline phosphor film according to the present invention, FIG. 10 is a graph illustrating transparency of a reflective type polycrystalline phosphor film according to the present invention, and FIG. 11 is a graph illustrating a light spectrum of a reflective type polycrystalline phosphor film according to the present invention.

As shown in FIG. 8, if a transmissive type polycrystalline phosphor film 110 is arranged on a sample 130 printed with letters, it is noted that the transmissive type polycrystalline phosphor film 110 has transparency because the letters of the sample 130 are seen through the transmissive type polycrystalline phosphor film 110.

If blue light enters the transmissive type polycrystalline phosphor film 110, the transmissive type polycrystalline phosphor film 110 may emit white light having a color temperature of 5500K to 6500K by emitting blue light transmitting a phosphor film and yellow light scattered by a phosphor.

In this case, a plurality of phosphor crystallines included in the transmissive type polycrystalline phosphor film 110 may have a relative density of 98% to 99.99%, pores included in the transmissive type polycrystalline phosphor film 110 may have a rate of 0.5% to 2%, approximately, and phosphor crystalline included in the transmissive type polycrystalline phosphor film 110 may have a size of 0.7µm to 2µm, approximately.

Also, a primary sintering process of a first temperature and a secondary sintering process of a second temperature lower than the first temperature may be performed for the transmissive type polycrystalline phosphor film 110.

In this case, the first temperature of the primary sintering process may be 1500°C to 1700°C, approximately, and the second temperature of the secondary sintering process may be a temperature lower than the first temperature of the primary sintering process as much as 300°C to 400°C.

The transmissive type polycrystalline phosphor film 110 manufactured as above shows an excellent light spectrum for realizing white light having a color temperature of 5500K to 6500K, approximately, as shown in FIG. 9.

Next, as shown in FIG. 10, in the case that a reflective type polycrystalline phosphor film 120 is arranged on a sample 130 printed with letters, it is noted that the reflective type polycrystalline phosphor film 120 is opaque because the letters of the sample 130 are not seen through the reflective type polycrystalline phosphor film 120.

If blue light enters the reflective type polycrystalline phosphor film 120, the reflective type polycrystalline phosphor film 120 may emit white light having a color temperature of 5500K to 6500K by emitting blue light reflecting a phosphor film and yellow light scattered by a phosphor.

In this case, a plurality of phosphor crystallines included in the reflective type polycrystalline phosphor film 120 may have a relative density of 90% to 96%, pores included in the reflective type polycrystalline phosphor film 120 may have a rate of 3% to 10%, approximately, and the phosphor crystalline included in the reflective type polycrystalline phosphor film 120 may have a size of 0.1µm to 0.7µm, approximately.

Also, a primary sintering process of a first temperature and a secondary sintering process of a second temperature lower than the first temperature may be performed for the reflective type polycrystalline phosphor film 120.

In this case, the first temperature of the primary sintering process may be 1000°C to 1500°C, approximately, and the second temperature of the secondary sintering process may be a temperature lower than the first temperature of the primary sintering process as much as 300°C to 400°C.

The reflective type polycrystalline phosphor film 120 manufactured as above shows an excellent light spectrum for realizing white light having a color temperature of 5500K to 6500K, approximately, as shown in FIG. 11.

FIG. 12 is a structural sectional view illustrating a polycrystalline phosphor film according to another embodiment of the present invention.

As shown in FIG. 12, the polycrystalline phosphor film 100 of the present invention may include a plurality of phosphor crystallines 10 and pores 20 formed between the phosphor crystallines 10.

In this case, the plurality of phosphor crystallines 10 may include a first phosphor crystalline 11 including a light emitting phosphor material and a second phosphor crystalline 12 including a non-light emitting phosphor material.

This is to improve surface reflective characteristic.

In the present invention, a mixture ratio of the first phosphor crystalline 11 including a light emitting phosphor material and the second phosphor crystalline 12 including a non-light emitting phosphor material may be controlled to control surface reflective characteristic and remove a yellow ring phenomenon.

The yellow ring phenomenon means that a yellow color is seen near a center portion of white light emitted from a white light emitting diode light source and a laser.

In this case, a difference in thermal expansion coefficients between the first phosphor crystalline 11 and the second phosphor crystalline 12 may be 0 to 2.0x10.⁻⁶/K.

This is because that optical characteristic may be deteriorated as a crystalline suitable for the reflective type phosphor film cannot be obtained if the difference in thermal expansion coefficients is great.

For example, the thermal expansion coefficient of the first phosphor crystalline 11 may be 8.0x10⁻⁶/K to 9.0x10⁻⁶/K, approximately and the thermal expansion coefficient of the second phosphor crystalline 12 may be 6.0x10⁻⁶/K to 9.0x10⁻⁶/K, approximately.

The first phosphor crystalline 11 may include, but is not limited to, (ACeₓ)₃Al₅O₁₂ (where A is at least one of Y, Gd, La and Lu, and X is 0.001 to 0.1).

Subsequently, the second phosphor crystalline 12 may include, but is not limited to, at least one of (A)₃Al₅O₁₂ (where A is at least one of Y, Gd, La and Lu), Al₂O₃ and ZrO₂.

Also, the second phosphor crystalline 12 may be 0.1wt% to 50wt%, approximately with respect to the first phosphor crystalline 11.

This is because that surface reflective characteristic of the phosphor film may be deteriorated if the second phosphor crystalline 12 is 0.1wt% or less or 50wt% or more with respect to the first phosphor crystalline 11.

The plurality of phosphor crystallines 10 including the first and second phosphor crystallines 11 and 12 may have a relative density of 90% to 96%, approximately.

In this way, the polycrystalline phosphor film 100 including the plurality of phosphor crystallines 10 may emit white light having a color temperature of 5500K to 6500K by generating light of a yellow wavelength range when light of a blue wavelength range enters there..

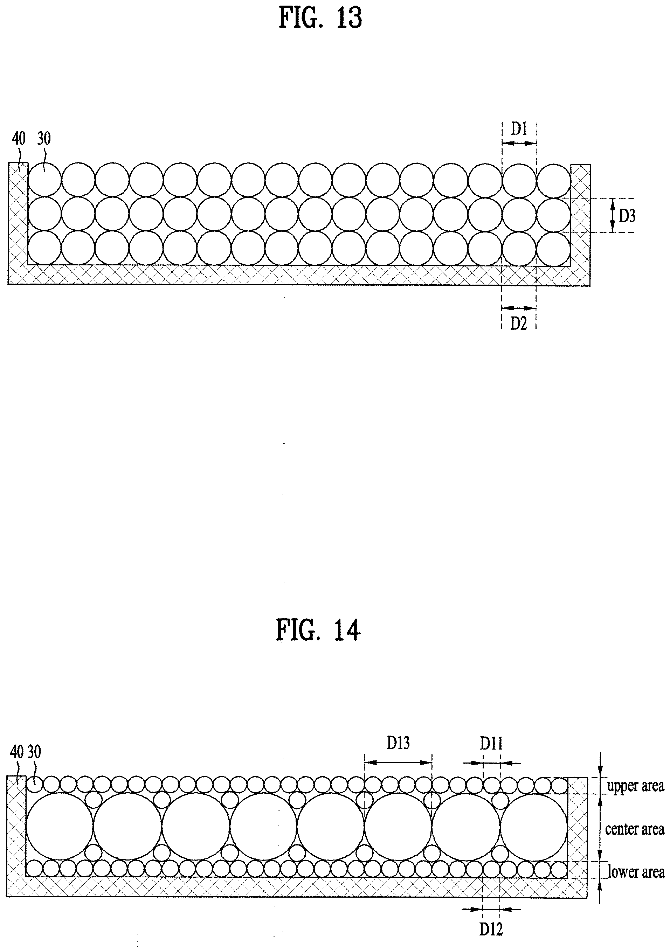

FIGS. 13 to 17 are views illustrating a process of injecting phosphor powders into a mold.

As shown in FIGS. 13 to 17, in the present invention, a plurality of phosphor particles 30 are injected into a mold 40 and a sintering process is performed to manufacture a polycrystalline phosphor film.

In this case, the phosphor particles 30 of phosphor powders injected into the predetermined mold 40 may have a size of 100nm to 1000nm, approximately.

This is because that crystallization of the phosphor particles 30 is not performed during a sintering process if the size of the phosphor particles 30 is 100nm or less or 1000nm or more.

Also, as shown in FIG. 13, the phosphor particles 30 of the phosphor powders injected into the predetermined mold 40 may have a uniform size.

For example, a diameter D1 of the phosphor particles 30 arranged at an upper area of the mold 40, a diameter D2 of the phosphor particles 30 arranged at a lower area of the mold 40, and a diameter D3 of the phosphor particles 30 arranged at a center area between the upper area and the lower area of the mold 40 may be equal to one another.

However, as the case may be, the phosphor particles 30 of the phosphor powders injected into the predetermined mold 40 may have a non-uniform size as shown in FIGS. 14 to 17.

For example, as shown in FIG. 14, in the sizes of the phosphor particles 30 of the phosphor powders injected into the predetermined mold 40, the sizes of the phosphor particles 30 of the phosphor powders injected into the upper area and the lower area of the predetermined mold 40 may be smaller than those of the phosphor particles 30 of the phosphor powders injected into the center area between the upper area and the lower area of the predetermined mold 40.

A diameter D11 of the phosphor particles 30 arranged at the upper area of the mold 40 and a diameter D12 of the phosphor particles 30 arranged at the lower area of the mold 40 may be smaller than a diameter D13 of the phosphor particles 30 arranged at the center area between the upper area and the lower area of the mold 40.

This is because that the reflective type polycrystalline phosphor film having high reflectivity on upper and lower surfaces is favorably manufactured.

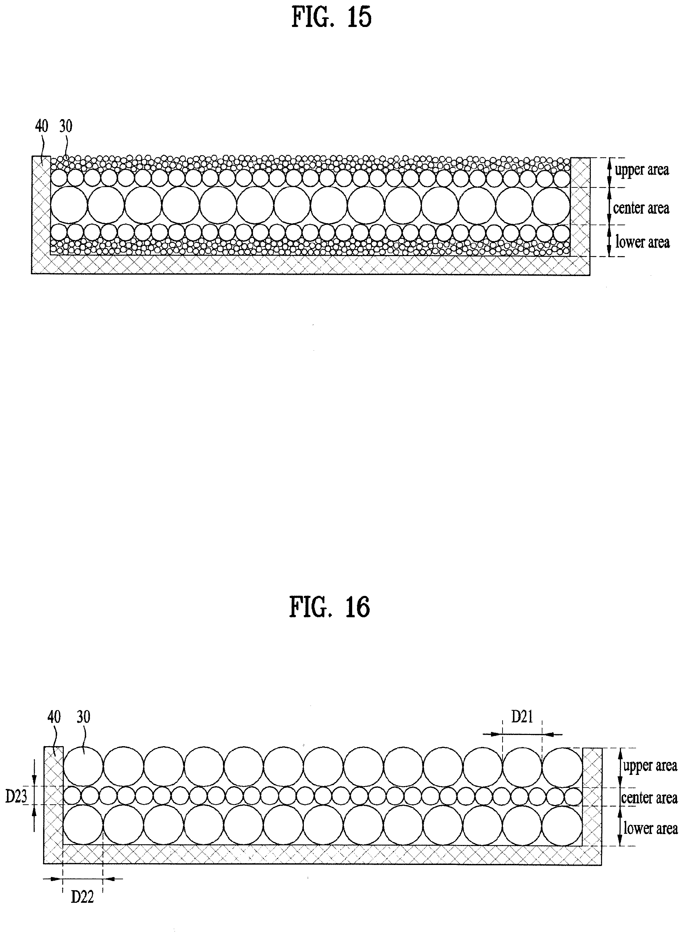

As the case may be, as shown in FIG. 15, the sizes of the phosphor particles 30 of the phosphor powders injected into the predetermined mold 40 may become greater toward the center area from the upper area or the lower area of the predetermined mold 40.

This is because that the reflective type polycrystalline phosphor film having high reflectivity on upper and lower surfaces is favorably manufactured.

As another case, as shown in FIG. 16, in the sizes of the phosphor particles 30 of the phosphor powders injected into the predetermined mold 40, the sizes of the phosphor particles 30 of the phosphor powders injected into the upper area and the lower area of the predetermined mold 40 may be greater than those of the phosphor particles 30 of the phosphor powders injected into the center area between the upper area and the lower area of the predetermined mold 40.

A diameter D21 of the phosphor particles 30 arranged at the upper area of the mold 40 and a diameter D22 of the phosphor particles 30 arranged at the lower area of the mold 40 may be greater than a diameter D23 of the phosphor particles 30 arranged at the center area between the upper area and the lower area of the mold 40.

This is because that the reflective type polycrystalline phosphor film having low reflectivity on upper and lower surfaces is favorably manufactured.

As other case, the sizes of the phosphor particles 30 of the phosphor powders injected into the predetermined mold 40 may become smaller toward the center area from the upper area or the lower area of the predetermined mold 40.

This is because that the reflective type polycrystalline phosphor film having low reflectivity on upper and lower surfaces is favorably manufactured.

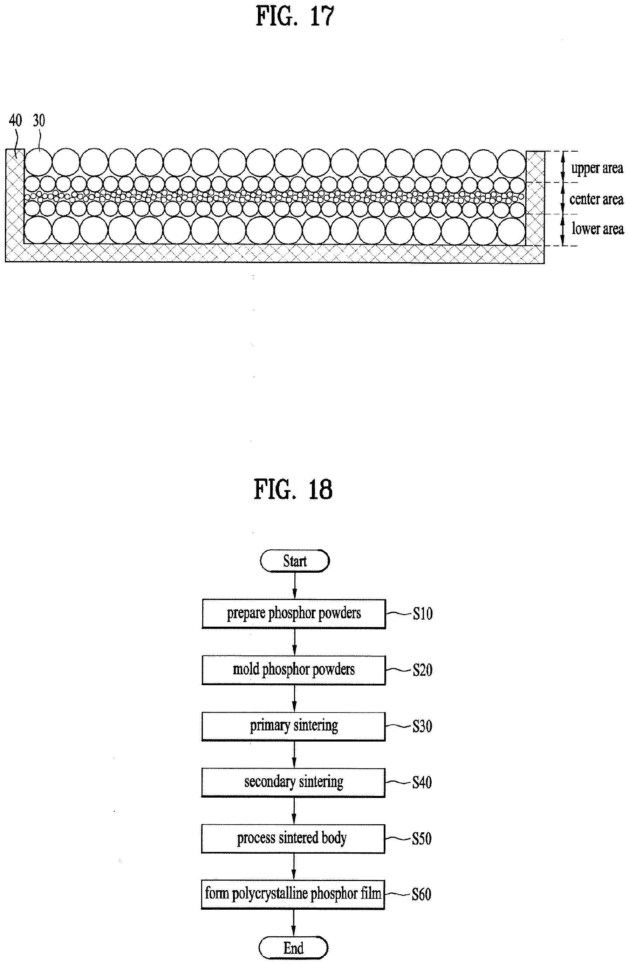

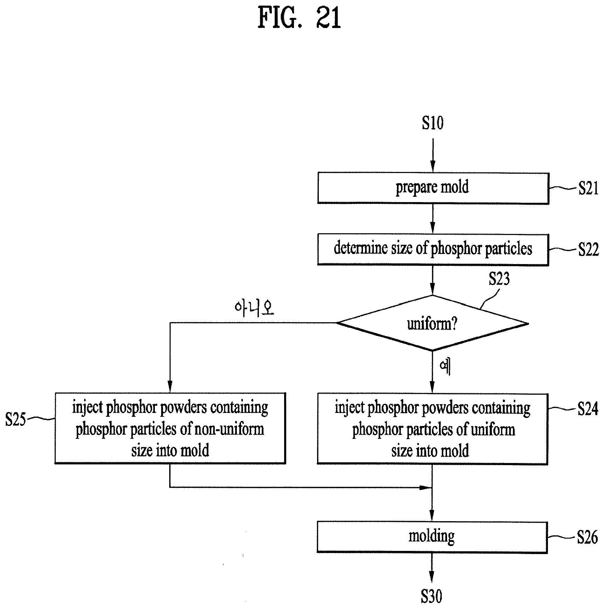

FIGS. 18 to 21 are flow charts illustrating a manufacturing method of a polycrystalline phosphor film according to the present invention.

As shown in FIG. 18, in the present invention, phosphor powders containing a plurality of phosphor particles are prepared (S10).

In this case, the phosphor particles contained in the phosphor powders may be compounds containing at least rare-earth material and Ce.

For example, at least one rare-earth material may include, but is not limited to, Y, Gd, La, and Lu.

As the case may be, the phosphor particles contained in the phosphor particles may be (A-Ceₓ)₃Al₅O₁₂, wherein A may be at least one of Y, Gd, La and Lu, and X may be 0.001 to 0.1.

As another case, the phosphor particles contained in the phosphor powders may include a first phosphor particle including a light emitting phosphor material and a second phosphor particle including a non-light emitting phosphor material.

In this case, a difference in thermal expansion coefficients between the first phosphor particle and the second phosphor particle may be 0 to 2.0x10⁻⁶/K.

For example, the thermal expansion coefficient of the first phosphor particle may be 8.0x10⁻⁶/K to 9.0x10⁻⁶/K, approximately and the thermal expansion coefficient of the second phosphor particle may be 6.0x10⁻⁶/K to 9.0x10⁻⁶/K, approximately.

In this case, the first phosphor particle may include, but is not limited to, (ACeₓ)₃Al₅O₁₂ (where A is at least one of Y, Gd, La and Lu, and X is 0.001 to 0.1), and the second phosphor particle may include, but is not limited to, at least one of (A)₃Al₅O₁₂ (where A is at least one of Y, Gd, La and Lu), Al₂O₃ and ZrO₂.

Also, the second phosphor particle may be 0.1wt% to 50wt%, approximately with respect to the first phosphor particle.

Next, the phosphor powders are injected into a predetermined mold and molded in a predetermined shape (S20).

In this case, the phosphor particles of the phosphor powders injected into the predetermined mold may have a size of 100nm to 1000nm, approximately.

This is because that crystallization of the phosphor particles is not performed during a sintering process if the size of the phosphor particles is 100nm or less or 1000nm or more.

Also, the phosphor particles of the phosphor powders injected into the predetermined mold may have a uniform size.

However, as the case may be, the phosphor particles of the phosphor powders injected into the predetermined mold may have a non-uniform size.

For example, in the sizes of the phosphor particles of the phosphor powders injected into the predetermined mold, the sizes of the phosphor particles of the phosphor powders injected into an upper area and a lower area of the predetermined mold may be smaller than those of the phosphor particles of the phosphor powders injected into a center area between the upper area and the lower area of the predetermined mold.

As the case may be, the sizes of the phosphor particles of the phosphor powders injected into the predetermined mold may become greater toward the center area from the upper area or the lower area of the predetermined mold.

As another case, in the sizes of the phosphor particles of the phosphor powders injected into the predetermined mold, the sizes of the phosphor particles of the phosphor powders injected into the upper area and the lower area of the predetermined mold may be greater than those of the phosphor particles of the phosphor powders injected into the center area between the upper area and the lower area of the predetermined mold.

As other case, the sizes of the phosphor particles of the phosphor powders injected into the predetermined mold may become smaller toward the center area from the upper area or the lower area of the predetermined mold.

Next, in the present invention, the phosphor powders having a predetermined shape are primarily sintered at a first temperature to generate a sintered body (S30) and then are secondarily sintered at a second temperature lower than the first temperature (S40).

In this case, the first temperature of the primary sintering may be 1500°C to 1700°C, approximately, or may be 1000°C to 1500°C, approximately.

The second temperature of the secondary sintering may be a temperature lower than the first temperature of the primary sintering as much as 300°C to 400°C.

Subsequently, the secondarily sintered body is processed (S50) to form a polycrystalline phosphor film (S60).

In this case, the polycrystalline phosphor film may include a plurality of phosphor crystallines and pores formed between the phosphor crystallines. The plurality of phosphor crystallines may have a relative density of 98% to 99.99%, the pores may have a rate of 0.5% to 2%, and the phosphor crystalline may have a size of 0.7µm to 2µm.

Also, the polycrystalline phosphor film may include a plurality of phosphor crystallines and pores formed between the phosphor crystallines. The plurality of phosphor crystallines may have a relative density of 90% to 96%, the pores may have a rate of 3% to 10%, and the phosphor crystalline may have a size of 0.1µm to 0.7µm.

Meanwhile, a step of preparing phosphor powders containing a plurality of phosphor particles may include a step S12 of generating phosphor particles by synthesizing at least one rare-earth material with Ce, and a step S14 of preparing the phosphor powders containing the generated phosphor particles.

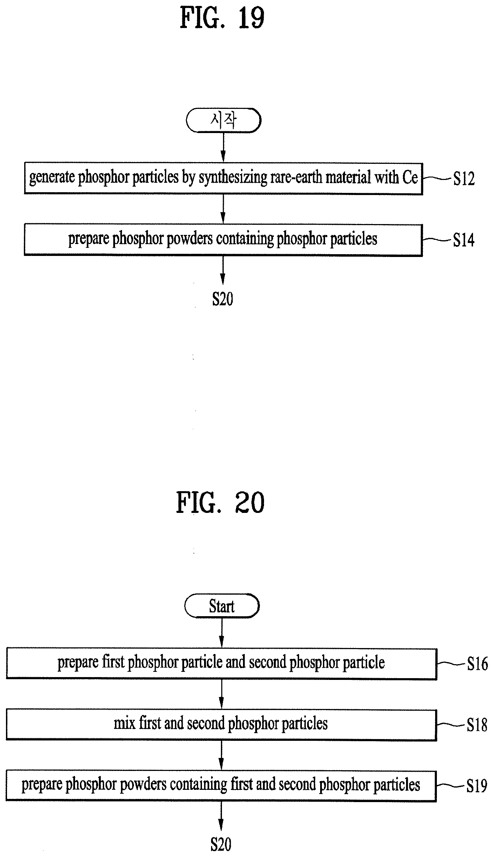

As another case, as shown in FIG. 20, a step of preparing phosphor powders containing a plurality of phosphor particles may include a step S16 of preparing a first phosphor particle including a light emitting phosphor material and a second phosphor particle including a non-light emitting phosphor material, a step S18 of mixing the first phosphor particle with the second phosphor particle, and a step S19 of preparing phosphor powders containing the first phosphor particle and the second phosphor particle.

As shown in FGI. 21, a step of molding phosphor powders in a predetermined shape by injecting the phosphor powders into a predetermined mold may include a step S21 of preparing a mold, a step S22 of determining a size of phosphor particles to be injected into the mold, a step S23 of checking whether the determined sizes of the phosphor particles are uniform, a step S24 of injecting the phosphor powders containing phosphor particles having a uniform size into the mold when the determined sizes of the phosphor particles are uniform, a step S25 of injecting the phosphor powders containing phosphor particles having a non-uniform size into the mold when the determined sizes of the phosphor particles are not uniform, and a step S26 of molding the phosphor powders injected into the mold in a predetermined shape.

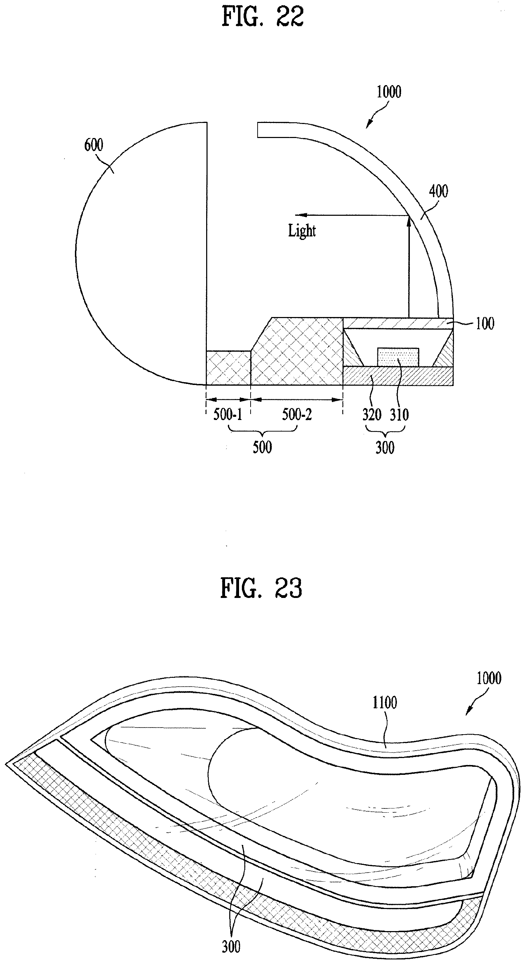

FIG. 22 is a sectional view illustrating a head lamp of a vehicle using a polycrystalline phosphor film according to the present invention, and FIG. 23 is a front view illustrating a head lamp of a vehicle using a polycrystalline phosphor film according to the present invention.

As shown in FIGS. 22 and 23, a head lamp 1000 of a vehicle using a polycrystalline phosphor film may include a light source 300 for generating light, a polycrystalline phosphor film 100 arranged on the light source 300, a reflector 400 reflecting light generated from the light source 300 to change a direction of the light, and a lens 600 for refracting light reflected from the reflector 400.

In this case, the polycrystalline phosphor film 100 may include a plurality of phosphor crystallines and pores formed between the phosphor crystallines. The phosphor crystalline may be compounds containing at least rare-earth material and Ce. A primary sintering process of a first temperature and a secondary sintering process of a second temperature lower than the first temperature may be performed for the polycrystalline phosphor film 100.

As shown in FIG. 22, the reflector 400 reflects light irradiated from the light source 300 in a certain direction.

Subsequently, a shade 500 is a member arranged between the reflector 400 and the lens 600, partially shielding or reflecting light reflected by the reflector 400 and headed for the lens 600 to form a light distribution pattern desired by a designer.

In this case, one side 500-1 and the other side 500-2 of the shade 500 may have their respective heights different from each other.

Light which has transmitted the polycrystalline phosphor film 100 of the light source 300 may be reflected by the reflector 400 and the shade 500 and then headed for the front of the vehicle by transmitting the lens 600.

In this case, the lens 600 refracts the light reflected by the reflector 400 toward the front.

Next, as shown in FIG. 23, the head lamp 1000 of the vehicle may include a light source 300 including a polycrystalline phosphor film, and a light housing 1100.

In this case, the polycrystalline phosphor film of the light source 300 may include the aforementioned embodiments and the light housing 1100 may stores the light source 300 and may includes a transmissive material.

The light housing 1100 for the vehicle may include a curve in accordance with a vehicle portion where the light housing is mounted and a vehicle design.

Since the light source 300 including the polycrystalline phosphor film may emit white light having a color temperature of 5500K to 6500K by generating light of a yellow wavelength range when light of a blue wavelength range enters there, if the light source is applied to the head lamp of the vehicle, a yellow ring phenomenon may be reduced and light efficiency and may be improved.

Therefore, in the present invention, the polycrystalline phosphor film may be manufactured by performing the sintering process two times, whereby optical conversion efficiency may be enhanced.

Also, in the present invention, the transmissive type polycrystalline phosphor film may be manufactured to have phosphor crystalline of which relative density is 98% to 99.99%, approximately and pores of which rate is 0.5% to 2%, approximately, whereby light emission characteristic may be improved.

Also, in the present invention, the reflective type polycrystalline phosphor film may be manufactured to have phosphor crystalline of which relative density is 90% to 96%, approximately and pores of which rate is 3% to 10%, approximately, whereby light emission characteristic may be improved.

Also, in the present invention, the reflective type polycrystalline phosphor film including a first phosphor crystalline including a light emitting phosphor material and a second phosphor crystalline including a non-light emitting phosphor material may be manufactured, whereby surface reflective characteristic may be controlled.

Also, in the present invention, the polycrystalline phosphor film capable of emitting white light having a color temperature of 5500K to 6500K when light of a blue wavelength range enters there may be manufactured to be applied to a head lamp light source of which yellow ring phenomenon is reduced.

### Mode for carrying out the Invention

The polycrystalline phosphor film, the manufacturing method therefor, and the vehicle lamp device using the same according to the present invention are not limited to the aforementioned embodiments, and all or some of the aforementioned embodiments may selectively be configured in combination so that various modifications may be made in the aforementioned embodiments.

The detailed description of the preferred embodiments of the present invention is given to enable those skilled in the art to realize and implement the present invention. While the present invention has been described referring to the preferred embodiments of the present invention, those skilled in the art will appreciate that many modifications and changes can be made to the present invention without departing from the spirit and essential characteristics of the present invention.

### Industrial Applicability

The present invention relates to a polycrystalline phosphor film applicable to a high-power optical device, a manufacturing method therefor, and a vehicle lamp device using the same. Therefore, the present invention has industrial applicability.

## Claims

1. A polycrystalline phosphor film comprising:
a plurality of phosphor crystallines; and
pores formed between the phosphor crystallines,
wherein the phosphor crystalline are compounds containing at least one rare-earth material and cerium (Ce).

2. The polycrystalline phosphor film of claim 1, wherein the at least one rare-earth material includes Y, Gd, La and Lu.

3. The polycrystalline phosphor film of claim 1, wherein the phosphor crystalline includes (A-Ceₓ)₃Al₅O₁₂ (where A is at least one of Y, Gd, La and Lu, and X is 0.001 to 0.1).

4. The polycrystalline phosphor film of claim 1, wherein the phosphor crystalline has a relative density of 98% to 99.99%.

5. The polycrystalline phosphor film of claim 4, wherein the pores have a rate of 0.5% to 2% when the relative density of the phosphor crystalline is 98% to 99.99%.

6. The polycrystalline phosphor film of claim 4, wherein the phosphor crystalline has a size of 0.7µm to 2µm when the relative density of the phosphor crystalline is 98% to 99.99%.

7. The polycrystalline phosphor film of claim 4, wherein a primary sintering process of a first temperature and a secondary sintering process of a second temperature lower than the first temperature are performed for the phosphor crystalline.

8. The polycrystalline phosphor film of claim 7, wherein the first temperature of the primary sintering process is 1500°C to 1700°C when the relative density of the phosphor crystalline is 98% to 99.99%.

9. The polycrystalline phosphor film of claim 7, wherein the second temperature of the secondary sintering process is a temperature lower than the first temperature of the primary sintering process as much as 300°C to 400°C when the relative density of the phosphor crystalline is 98% to 99.99%.

10. The polycrystalline phosphor film of claim 1, wherein the phosphor crystalline has a relative density of 90% to 96%.

11. The polycrystalline phosphor film of claim 10, wherein the pores have a rate of 3% to 10% when the relative density of the phosphor crystalline is 90% to 96%.

12. The polycrystalline phosphor film of claim 10, wherein the phosphor crystalline has a size of 0.1µm to 0.7µm when the relative density of the phosphor crystalline is 90% to 96%.

13. The polycrystalline phosphor film of claim 10, wherein a primary sintering process of a first temperature and a secondary sintering process of a second temperature lower than the first temperature are performed for the phosphor crystalline.

14. The polycrystalline phosphor film of claim 13, wherein the first temperature of the primary sintering process is 1000°C to 1500°C when the relative density of the phosphor crystalline is 90% to 96%.

15. The polycrystalline phosphor film of claim 13, wherein the second temperature of the secondary sintering process is a temperature lower than the first temperature of the primary sintering process as much as 300°C to 400°C when the relative density of the phosphor crystalline is 90% to 96%.

16. A method for manufacturing a polycrystalline phosphor film, the method comprising:
preparing phosphor powders containing a plurality of phosphor particles;
molding the phosphor powders in a predetermined shape by injecting the phosphor powders into a predetermined mold;
generating a sintered body by primarily sintering the phosphor powders having the predetermined shape at a first temperature;
secondarily sintering the primarily sintered body at a second temperature lower than the first temperature; and
forming a polycrystalline phosphor film by processing the secondarily sintered body.

17. The method of claim 16, wherein the phosphor particles of the phosphor powders injected into the predetermined mold have a size of 100nm to 1000nm in the step of molding the phosphor powders in a predetermined shape by injecting the phosphor powders into a predetermined mold.

18. The method of claim 16, wherein the first temperature of the primary sintering is 1500°C to 1700°C or 1000°C to 1500°C in the step of generating a sintered body by primarily sintering the phosphor powders having the predetermined shape at a first temperature.

19. The method of claim 16, wherein the second temperature of the secondary sintering is a temperature lower than the first temperature of the primary sintering as much as 300°C to 400°C in the step of secondarily sintering the primarily sintered body at a second temperature lower than the first temperature.

20. A vehicle lamp device using a polycrystalline phosphor film, the vehicle lamp device comprising:
a light source for generating light;
the polycrystalline phosphor film arranged on the light source;
a reflector for reflecting light generated from the light source to change a direction of the light; and
a lens for refracting the light reflected from the reflector,
the polycrystalline phosphor film comprising:
a plurality of phosphor crystallines; and
pores formed between the phosphor crystallines,
wherein the phosphor crystalline is compounds containing at least one rare-earth material and cerium (Ce).
